## Europäisches Patentamt
## European Patent Office
## Office européen des brevets

(19)

(11) Publication number: **0 007 764**
**B1**

(12) **EUROPEAN PATENT SPECIFICATION**

(45) Date of publication of patent specification: **13.05.81**

(51) Int. Cl.³: **H 01 F 1/11, C 04 B 35/26**

(21) Application number: **79301408.5**

(22) Date of filing: **16.07.79**

(54) Stabilized ferromagnetic chromium dioxide and a process for preparing it.

(30) Priority: **21.07.78 IT 2596078**

(43) Date of publication of application:
**06.02.80 Bulletin 80/3**

(45) Publication of the grant of the European patent:
**13.05.81 Bulletin 81/19**

(84) Designated Contracting States:
**DE FR GB IT NL**

(56) References cited:
**FR - A - 1 407 333**
**FR - A - 2 138 160**
**GB - A - 859 937**
**US - A - 3 904 538**

(73) Proprietor: **Montedison S.p.A.**
**31, Foro Buonaparte**
**Milan (IT)**

(72) Inventor: **Basile, Giampiero**
**37, Via Giovanni Bosco**
**Alessandria (IT)**
Inventor: **Boero, Giancarlo**
**8/A, Strada S. Spirito**
**Asti (IT)**

(74) Representative: **Lamb, John Baxter Marks & Clerk et al,**
**57/60 Lincoln's Inn Fields**
**London WC2A 3LS (GB)**

Courier Press, Leamington Spa, England.

# 0 007 764

### Stabilized ferromagnetic chromium dioxide and a process for preparing it

This invention relates to a stabilized ferromagnetic chromium dioxide and a process for preparing it.

Chromium dioxide is a material of high magnetic characteristics which is mainly employed in the manufacture of magnetic recording tapes. Chromium dioxide has a certain chemical reactivity with respect to water and certain easily oxidizable functional groups such as, for example, hydroxyl or amino groups. Such functional groups are often present in the resins used in the formulations for magnetic recording tapes, with the result that the $CrO_2$ particles incorporated in the tape may oxidize such groups, whereby the $CrO_2$ particles are themselves reduced, at least on the surface, to chromium compounds with a lower valency, such as CrOOH, which are not ferromagnetic so that the residual magnetization of the tape may decrease in the course of time. As a result a tape, on which a recording has been made, may show, after a certain period of time, a drop in output level.

It is known to stabilize $CrO_2$ by subjecting the surface of $CrO_2$ particles to a reducing treatment for example by reaction with $H_2S$ or with alkaline disulphites. Such a treatment has, however, the drawback of consuming, as a result of the reduction reaction, a considerable quantity (for example up to about 30%) of the treated $CrO_2$.

It has also been proposed to stabilize $CrO_2$ by coating $CrO_2$ particles with various substances that are insoluble in water, such as for example $SiO_2$ or $Al_2O_3$. It was not possible, however, to obtain an appreciable stabilizing effect with such coatings: while the $CrO_2$ particles dispersed in water, showed after the treatment, a considerable reduction in their reactivity with water, no appreciable improvement could be detected when the stability of the $CrO_2$ was tested on magnetic recording tapes themselves.

It is an object of this invention to provide a chromium dioxide that will show a high chemical stability towards water and oxidizable organic substances, and thus display a high chemical stability in magnetic recording tapes in which it is used.

Another object of this invention is to provide a stabilized $CrO_2$ by means of a simple coating, thus avoiding the consumption of a part of the $CrO_2$ during the stabilizing treatment.

The present invention provides a stabilized ferromagnetic chromium dioxide in which the particles of $CrO_2$ are coated with a stabilizing substance which consists of:

(a) an equimolar mixture of $Fe_2O_3$ and MnO, or
(b) a mixture of a ferrite of the formula $MeFe_2O_4$ with the oxides $Fe_2O_3$ and MeO (in which Me represents Cu, Co, Zn or Mg), in which mixture the molar ratio $Fe_2O_3$:MeO is unity and the amount of ferrite present in the mixture is that obtained by calcining an equimolar mixture of $Fe_2O_3$ and MeO at a temperature of from 250 to 350°C.

The amount of coating stabilizing substance will generally be from 2% to 12% by weight, based on the weight of $CrO_2$.

Amounts of stabilizing coating below 2% may exert an insufficient stabilizing effect, while amounts greater than 12% do not in general, improve the stability of the products. Preferably the coating is present in an amount of from 3 to 10% by weight, based on the weight of $CrO_2$.

Coatings consisting of Cu or Co ferrites and oxides or those consisting of Mn oxide and $Fe_2O_3$ in general confer to the $CrO_2$ a greater stability, in comparison with those consisting of Zn or Mg ferrites and oxides and they are, therefore, preferred. Particularly preferred are coatings consisting of Cu ferrite and oxide.

The stabilized $CrO_2$ of the invention may be obtained by a three-stage process in which:

in the first stage $Fe(OH)_3$ and $Mn(OH)_2$ or $Me(OH)_2$, in equivalent amounts, are co-precipitated onto $CrO_2$ dispersed in water and the water is then separated from the mixture of $CrO_2$ and the respective hydroxides;

in the second stage, the mixture of $CrO_2$ and the respective hydroxides is dried at a temperature not exceeding about 100°C; and

in the third stage, the dried mixture is calcined, generally at a temperature of from 250 to 350°C.

In the first stage, the co-precipitation of the hydroxides, may be achieved by reacting water-soluble salts, e.g. chlorides or sulphates, of the metals, with an aqueous solution of an alkaline hydroxide, for example NaOH or $NH_4OH$. Such alkaline solutions are used in quantities such as to bring the $CrO_2$ slurry containing the metal salts, to pH values that are optimal for the co-precipitation that is, generally, to a pH of from 8 to 10.

In the second stage, that is the drying, it is convenient to operate at a temperature not exceeding 100°C, because above this temperature the $CrO_2$ that is still in contact with the water may partially react therewith.

In the third stage, where a metal Me is employed, the formation of ferrite occurs by reaction of $Fe_2O_3$ with MeO. This reaction does not go to completion so that the coating consists of a mixture of $MeFe_2O_4$, $Fe_2O_3$ and MeO. The amount of ferrite that is formed is generally higher with higher calcining temperatures. There is no formation of ferrite in the case of Mn. In any case, there is obtained a particularly adherent coating on the $CrO_2$ particles.

Calcining temperatures below about 250°C, usually, do not ensure a good stabilization of the

2

0 007 764

$CrO_2$, while temperatures greater than about 350°C, in general, should be avoided because they may cause partial degradation of the $CrO_2$. Preferably the calcination should be carried out at a temperature of from 300° to 350°C, while the best results are usually obtained at a calcination temperature of from 330°C to 350°C.

The coating obtained thus consists of a calcined product obtained at between 250° and 350°C, but preferably at between 300° and 350°C, from equimolar amounts of $Fe_2O_3$ and MnO, CuO, CoO, ZnO or MgO.

Whilst the quantity of ferrite that is formed increases with increasing calcining temperature, it also depends on the nature of the metal Me. Thus, coatings formed by calcining at 350°C contain about 25% by weight of $MeFe_2O_4$ (calculated on the total weight of the coating) in the case of Cu; about 35% of $MeFe_2O_4$ in the case of Co; about 60% of $MeFe_2O_4$ in the case of Zn; and about 75% of $MeFe_2O_4$ in the case of Mg. These quantities have been determined on the basis of difractometric X-ray analysis. A coating of $CuFe_2O_4$, $Fe_2O_3$ and CuO formed by calcining at temperatures from 250° to 350°C, generally contains from about 11% and about 25% by weight of $CuFe_2O_4$. The preferred coating, obtained by calcining at a temperature of from 300° to 350°C, generally has a $CuFe_2O_4$ content of from about 18% to about 25%.

Any type of ferromagnetic chromium dioxide may be used as the starting $CrO_2$. Thus, there may be used a $CrO_2$ free of modifiers as well as a $CrO_2$ modified with any modifying element for $CrO_2$ such as for example, Sb, Te, Fe, La and Ru, or any combination of modifying elements such as, for example, Sb and Fe, Sb and Te, Te and Fe, La and Fe or Sb and Te and Fe.

Chromium dioxide modified with a modifying element or with a combination of modifying elements, is described in numerous patents, for example in United States patents nos. 2,885,365, 2,923,683, 2,923,684, 3,034,988, 3,068,176, 3,371,043, 3,640,871, 3,687,851 and 3,874,923.

The greatest benefit is obviously obtained when the starting $CrO_2$ has characteristics that makes it suited for use in magnetic recording tapes, that is, a coercive force, $H_c$, of at 35.81 kA/m (450 Oersted) and a residual magnetization of at least 0.1500 Tesla (1500 Gauss), a mean particle length of not more than 0.5 $\mu$m and an axial ratio (length/width ratio) of the particles of around 10.

The best stability, in general, is attained when the starting $CrO_2$ particles are suitably dis-aggregated so as to bring the means size of the agglomerates to under 150 $\mu$m, and preferably under 50$\mu$m. Best results are obtained in general when this size is brought down to below 10 $\mu$m.

The disaggregation of the particles may be carried out by either dry or wet grinding. Wet grinding proved particularly convenient, for example in a rotating jar containing a suitable grinding material, for example steatite balls, or in a micro-ball mill with micro-balls made for instance, of steel or ceramic material, or in a vessel containing glass microspheres, and subjected to shaking.

Wet grinding is usually carried out in water generally with a $CrO_2$ concentration of from 150 to 350 g per litre of slurry, preferably from 250 and 300 g per litre of slurry.

The first stage of the process is usually carried out at a temperature of from 20° to 100°C, preferably from 60° and 90°C. The $CrO_2$ concentration in the slurry will usually be from 50 to 100 grams per litre of slurry. It is advisable to operate under vigorous stirring in order to ensure a uniform distribution of the reactants and of the reaction products in the chromium dioxide mass.

The iron salt used to form $Fe(OH)_3$ may be a ferric or ferrous salt. In this latter case, $Fe(OH)_2$ is first precipitated and is then oxidized to $Fe(OH)_3$ with an oxidizing agent. It is convenient to carry out the oxidation by bubbling a stream of air or oxygen through the reaction medium. The bubbling confers the advantage of providing an excellent mixing of the slurry and, thus, may also be used when starting from a ferric salt.

The iron salt and the salt of Mn or Me may be added separately or together. When the $CrO_2$ is wet ground, either one or both of the salts may be added to the $CrO_2$ slurry, before the grinding itself.

The alkali or ammonia solution, on the contrary, is added last. The addition of the alkali solution may be carried out, for instance, over a period of time of from 10 to 60 minutes, but preferably is carried out over a period of about 30 minutes, until the desired pH value is attained.

Once the desired pH value has been attained, it is convenient to continue stirring for a further period of time, e.g. for about two hours, keeping the temperature unaltered.

The slurry obtained at the end of the first stage is separated from the water, for instance by filtration, and is then washed with water to remove soluble salts produced during the co-precipitation reaction.

The drying of the filter cake is carried out at a temperature not exceeding about 100°C, as previously mentioned, for example at a temperature of from 60° to 90°C.

It is advisable to employ certain expedients to shorten the drying time: for this purpose the cake may, for example, be heated, under vacuum, or it may be imbibed with acetone before being heated. These two expedients may be used together.

The dried cake is then preferably dry-ground, for instance in an impact stud mill with counter-rotating stud disks and is then calcined at the temperatures discussed above. Calcining is generally carried out for a period of at least three hours, preferably for a period of from 5 to 10 hours.

The calcining operation may be carried out either in a static oven or in a rotary furnace.

Since the co-precipitation yield is 100%, the quantity of coating that has formed will coincide

3

with the quantity of $Fe_2O_3$ and divalent metal oxide introduced into the first stage.

From diffractometric X-ray examination it has been found that the coating on the $CrO_2$ consists of oxides (in the case of Mn) or ferrite mixed with $Fe_2O_3$ and MeO (in the case of Cu, Co, Zn and Mg).

The products according to this invention show a marked stability with respect to water and to oxidizable organic substances and, thus, show a considerable stability when used in magnetic tapes.

The stability of such products has been determined on a tape under particularly severe conditions according to a method known, per se which consists in exposing a magnetic tape made with $CrO_2$ for a number of days to a hot environment at high relative humidity and in measuring the decay of the residual magnetization and of the saturation magnetization of the tape caused by such exposure. Such decay is substantially proportional to the decay of $CrO_2$.

In order that the invention may be well understood the following Examples are given by way of illustration only.

Example 1

The starting chromium dioxide was a $CrO_2$ modified with 650 ppm of Te and 1500 ppm of Fe and having a coercive force [measured in a field of 79.58 kA/m (1000 Oersted)] of 43.77 kA/m (550 Oersted), a maximum magnetization, $B_m$ [measured in a field of 79.58 kA/m (1000 Oersted)] of 0.3015 Tesla (3015 Gauss), and a residual magnetization, $B_r$ of 0.1920 Tesla (1920 Gauss).

300 Grams of this chromium dioxide were placed in a container provided with a tight lid and having a volume of 4000 $cm^3$. Into the same container were also placed 2700 g of glass spheres having a diameter of 2.5 mm and 1200 g of deionized water.

This container was then fixed on a Red Devil shaking apparatus which exerted a vigorous shaking to mill the chromium dioxide. At the end of the milling, the average or mean size of the agglomerates of particles was lower than 10 $\mu$m. The glass spheres were then separated from the $CrO_2$ slurry by retaining them on a fine net and they were then washed with 4740 g of deionized water. The wash water was then added to the slurry so that the $CrO_2$ concentration of the latter dropped to 50 g/l.

6000 $cm^3$ of the slurry were then placed into a 10 litre beaker, vigorously stirred with a blade stirrer and then heated to 65°C.

To the slurry were then added 55.78 g of $FeSO_4.7H_2O$ and 25.05 grams of $CuSO_4.5H_2O$ dissolved in 1000 ml of deionized water. (This was sufficient to provide, after calcining, 8 g of coating per 100 g of $CrO_2$).

After about 30 minutes there was added some NaOH solution having a concentration of 70 g/litre so as to attain in a further 30 minutes a pH of 9.5. The temperature was then maintained at 65°C for about 2 hours while maintaining the stirring and at the same time bubbling through the slurry air drawn from a bottle at a rate of 30 normal litres per hour.

The $CrO_2$ slurry was then filtered under vacuum on a Büchner funnel and then washed until the wash waters were free from sulphate ion. In a second stage the filter cake was dried in an oven under a vacuum of 26.665 kPa (200 mm Hg) at 90°C for 12 hours.

The dried cake was then disaggregated by means of dry milling in an 'Alpine' impact stud mill with counter-rotating stud disks. The powdery product was finally calcined in a third stage, in a rotary furnace, at a temperature of from 350°C, for 10 hours.

The stabilized product thus obtained had a coercive force of 43.37 kA/m (545 Oersted), a maximum magnetization of 0.2600 Tesla (2600 Gauss) and a residual magnetization of 0.1600 Tesla (1600 Gauss).

From diffractometric X-ray analysis, the coating appeared to consist of $CuFe_2O_4$, alpha-$Fe_2O_3$ and CuO; the $CuFe_2O_4$ forming about 25% by weight of the coating.

In order to evaluate the stability of the product a film was prepared according to the following procedure. To 5 g of stabilized chromium dioxide were added 15 g of a varnish formulation for $CrO_2$ consisting of:

| | |
|---|---|
| —polymeric compounds (saturated polyurethane and vinyl acetate and vinyl chloride copolymer)) | 18% by weight |
| —methylethylketone | 40% by weight |
| —tetrahydrofuran | 20% by weight |
| —dimethylacetamide | 20% by weight |
| —anionic surfactant | 2% by weight |

To this mixture were then added 15 g of tetrahydrofuran and the whole was introduced into a 100 ml glass container together with 45 g of small glass spheres of 5 mm diameter.

This container was then placed in a 'Red Devil' vibration dispersor in which it was subjected to vigorous stirring for one hour. After this time there were added a further 10 g of the varnish formulation and 5 g of tetrahydrofuran and stirring was continued for another 5 minutes.

4

The varnish containing homogeneously dispersed coated $CrO_2$ thus obtained was spread on a flexible support consisting of a plasticized cardboard giving to the film spreader a thickness of 8 mils (203 $\mu$m).

The coating was allowed to dry for 24 hours, and then the $B_m$ and $B_r$ of the coating were measured by means of an alternating current hysterisigraph with a magnetizing field of 79.58 kA/m (1000 Oersted).

The cardboard supported film was then exposed for 4 days at 65°C in an environment having a relative humidity of 50%.

Then $B_m$ and $B_r$ were again measured and the percentage decrease of these properties due to the exposure was evaluated. The drop in $B_m$ and $B_r$ was equal 12%.

With an identical film prepared according to the same procedures, starting from 5 g of the same $CrO_2$, but which had not been stabilized in accordance with the invention, the loss in $B_m$ and $B_r$ was 23% when tested in the same manner.

Examples 2—5

The starting chromium dioxide employed contained 700 parts per million of Te and 1500 ppm of Fe and had the following magnetic properties:

$H_c = 46.95$ kA/m (590 Oersted)

$B_m = 0.2900$ Tesla (2900 Gauss)

$B_r = 0.1800$ Tesla (1800 Gauss).

This $CrO_2$ was coated with various $CuFe_2O_4$:$Fe_2O_3$:$CuO$ coatings following the procedure of Example 1 except that different amounts of reactants were used in order to coat the product with different quantities of stabilizing agent.

The stability of the coated CrO in a magnetic film was evaluated following the same procedure as described in Example 1. The characteristics of the stabilized product and the results of the stability tests are shown in Table 1 below.

For comparative purposes, there are also reported the results of the stability tests carried out on a sample of the same $CrO_2$ which had not been coated.

TABLE 1

| Example | Amount of coating: % by weight with respect to $CrO_2$ | Magnetic properties of stabilized $CrO_2$ | | | Stability test on the film: reduction of $B_m$ in % |
|---|---|---|---|---|---|
| | | $H_c$ in kA/m (Oersted) | $B_m$ in Tesla (Gauss) | $B_r$ in Tesla (Gauss) | |
| 2 | 2.5 | 46.95 (590) | 0.2750 (2750) | 0.1700 (1700) | 15 |
| 3 | 5 | 46.95 (590) | 0.2650 (2650) | 0.1650 (1650) | 13 |
| 4 | 7.5 | 46.55 (585) | 0.2565 (2565) | 0.1615 (1615) | 12.5 |
| 5 | 10 | 47.35 (595) | 0.2450 (2450) | 0.1500 (1500) | 12 |
| Comparative test | 0 | — | — | — | 23 |

### Examples 6—9

The procedures of Examples 2 to 5 were repeated except that the calcining temperature was 300°C. The characteristics of the products thus obtained and the results of the stability tests are shown in Table II.

From X-ray diffractometric analysis, the coating of Example 9 proved to be composed of $CuFe_2O_4$, alpha-$FeO_3$ and CuO and to contain about 18% by weight of $CuFeO_4$.

TABLE II

| Example | Amount of coating: % by weight with respect to $CrO_2$ | Magnetic properties of stabilized $CrO_2$ | | | Stability test on the film: reduction of $B_m$ in % |
|---|---|---|---|---|---|
| | | $H_c$ in kA/m (Oersted) | $B_m$ in Tesla (Gauss) | $B_r$ in Tesla (Gauss) | |
| 6 | 2.5 | 47.35 (595) | 0.2680 (2680) | 0.1680 (1680) | 17.5 |
| 7 | 5 | 46.95 (590) | 0.2600 (2600) | 0.1620 (1620) | 17 |
| 8 | 7.5 | 47.35 (595) | 0.2250 (2550) | 0.1600 (1600) | 17 |
| 9 | 10 | 47.35 (595) | 0.2300 (2300) | 0.1450 (1450) | 16.5 |
| Comparison | 0 | — | — | — | 23 |

### Example 10

The starting chromium dioxide was one modified with 1200 ppm of Te and 1500 ppm of Fe and had the following magnetic properties:

$H_c = 49.34$ kA/m (620 Oersted)

$B_m = 0.2800$ Tesla (2800 Gauss)

$B_r = 0.1750$ Tesla (1750 Gauss).

This $CrO_2$ was coated as described in Example 1, except that the quantities of reactants were such as to give 6% by weight of coating based on the weight of $CrO_2$. The magnetic characteristics of the stabilized product were the following:

$H_c = 48.14$ kA/m (605 Oersted).

$B_m = 0.2600$ Tesla (2600 Gauss)

$B_4 = 0.1600$ Tesla (1600 Gauss).

The drop in $B_m$, on measuring the stability, was 13% as compared with a value of 27% for the non-stabilised product.

### Example 11

Example 10 was repeated, except that in this case there was used $Fe_2(SO)_3.4H_2O$ instead of $FeSO_4.7H_2O$. Air was bubbled through as in the other examples.

In the stability test, the drop in $B_m$ was 13% as compared with a value of 27% for the non-stabilized product.

### Examples 12 and 13

The starting $CrO_2$ was one modified with 1000 ppm of Te and 1500 ppm of Fe and having the following magnetic properties:

$H_c = 47.75$ kA/m (600 Oersted)

$B_m = 0.2850$ Tesla (2850 Gauss)

$B_r = 0.1700$ Tesla (1700 Gauss).

This $CrO_2$ was coated as described in Example 1, except that the 1st stage was carried out at 20°C (Example 12) or at 80°C (Example 13) instead of at 65°C.

In Example 12 the stabilized product had the following magnetic properties:

$H_c = 47.35$ kA/m (595 Oersted)

$B_m = 0.2620$ Tesla (2620 Gauss)

$B_r = 0.1550$ Tesla (1550 Gauss).

and the drop of $B_m$ in the tape was 16% as compared with 30% for the unstabilized product.

In Example 13 the stabilized product had the same magnetic properties as the product of Example 12, while the drop in $B_m$ in the tape was 12%.

### Examples 14—17

In these examples Mn, Mg, Co and Zn were used instead of Cu compounds.

The starting $CrO_2$ was that of Example 12 and the procedures of Example 1 were followed, except that the starting divalent metal salt was, according to the Example, $MnSO_4.H_2O$; $MgSO_4.7H_2O$; $CoSO_4.7H_2O$, or $ZnSO_4.7H_2O$, and the amount of coating added was 10%, based on the weight of $CrO_2$.

The characteristics of the stabilized products and the results of the stability tests are shown on Table III. The coating of Example 14 consists of MnO and alpha-$Fe_2O_3$ and is free of ferrite. The coating of Example 15 consists of $MgFe_2O_4$ (about 75% by weight) MgO and alpha-$Fe_2O_3$. The coating of product 17 consists of $ZnFe_2O_4$ (about 60% by weight), ZnO and alpha-$Fe_2O_3$.

### Example 18

The procedure of Example 16 was repeated, except that the first stage was carried out at 80°C instead of at 65°C. The stabilized product had the following magnetic properties:

$H_c = 46.55$ kA/m (585 Oersted)

$B_m = 0.2600$ Tesla (2600 Gauss)

$B_r = 0.1510$ Tesla (1510 Gauss).

The drop of $B_m$ in the tape amounted to 14% as compared with 25% for the non-stabilized product. The coating consisted of $CoFe_2O_4$ (about 35% by weight), CoO and alpha-$Fe_2O_3$.

TABLE III

| Example | Nature of bivalent metal | Quantity of coating : % by weight based on $CrO_2$ | Magnetic properties of stabilized $CrO_2$ | | | Test of stability in the film : reduction in $B_m$ in % |
|---------|---------|---------|---------|---------|---------|---------|
| | | | $H_c$ in kA/m (Oersted) | $B_m$ in Tesla (Gauss) | $B_r$ in Tesla (Gauss) | |
| 14 | Mn | 10 | 47.75 (600) | 0.2600 (2600) | 0.1500 (1500) | 14 |
| 15 | Mg | 10 | 48.14 (605) | 0.2550 (2550) | 0.1450 (1450) | 22 |
| 16 | Co | 10 | 47.35 (595) | 0.2580 (2580) | 0.1500 (1500) | 15.5 |
| 17 | Zn | 10 | 47.35 (595) | 0.2600 (2600) | 0.1500 (1500) | 19.5 |
| Comparative | None | 0 | — | — | — | 30 |

## Claims

1. A stabilized ferromagnetic chromium-dioxide comprising particles of a ferromagnetic chromium dioxide coated with a stabilizing substance characterized in that the stabilizing substance consists of (a) an equimolar mixture of $Fe_2O_3$ and MnO or (b) a mixture of a ferrite $MeFe_2O_4$, and the oxides $Fe_2O_3$ and MeO (in which Me is Cu, Co, Zn or Mg) in which mixture the molar ratio $Fe_2O_3$:MeO is unity and the amount of ferrite in the mixture is that obtained by calcining an equimolar mixture of $Fe_2O_3$ and MeO at a temperature of from 250 to 350°C.

2. A stabilized ferromagnetic chromium dioxide according to claim 1 characterized in that the stabilizing substance is present in an amount of from 2 to 12% by weight, based on the weight of ferromagnetic chromium dioxide.

3. A stabilized ferromagnetic chromium dioxide according to claim 1 or claim 2 characterized in that Me is Cu or Co.

4. A process for the production of a stabilized ferromagnetic chromium dioxide according to any one of claims 1—3 characterized in that it comprises the steps of

   (1) dispersing a particulate ferromagnetic chromium dioxide in water;
   (2) co-precipitating equivalent amounts of $Fe(OH)_3$ and a divalent metal hydroxide $Mn(OH)_2$ or $Me(OH)_2$ upon the dispersed chromium dioxide;
   (3) separating water from the mixture of chromium dioxide, $Fe(OH)_3$ and divalent metal hydroxide;
   (4) drying the mixture of chromium dioxide, $Fe(OH)_3$ and divalent metal hydroxide at a temperature not exceeding 100°C; and
   (5) calcining the dried mixture at a temperature of from 250 to 350°C

5. A process according to claim 4 characterized in that the $Fe(OH)_3$ and divalent metal oxide are precipitated upon the chromium dioxide by reacting a water-soluble salt of the divalent metal and a water-soluble salt of ferrous or ferric iron with an aqueous solution of an alkali metal hydroxide or ammonium hydroxide and, where the iron salt is a salt of ferrous iron, oxidizing the precipitated ferrous hydroxide to ferric hydroxide with an oxidising agent.

6. A process according to claim 5, characterized in that the oxidation of ferrous hydroxide is carried out by bubbling air or oxygen through the reaction medium.

7. A process according to any one of claims 4 to 6, characterized in that the calcining is carried out at a temperature of from 300° to 350°C.

8

# 0 007 764

## Revendications

1. Dioxyde de chrome ferromagnétique stabilisé, formé de particules de dioxyde de chrome ferromagnétique recouvertes d'une substance stabilisante, caractérisé en ce que ladite substance stabilisante est formée:

a) d'un mélange équimolaire de $Fe_2O_3$ et de MnO, ou
b) d'un mélange d'une ferrite $MeFe_2O_4$ et d'oxydes $Fe_2O_3$ et MeO,
   Me représente Cu, Co, Zn ou Mg,
dans lequel mélange, le rapport molaire $Fe_2O_3$/MeO est égal à l'unité et en ce que la teneur en ferrite du mélange est celle qu'on obtient par calcination d'un mélange équimolaire de $Fe_2O_3$ et de MeO à une température de 250 à 350°C.

2. Dioxyde de chrome ferromagnétique stabilisé selon la revendication 1, caractérisé en ce que la substance stabilisante est présente à une concentration comprise entre 2 et 12% en poids, exprimée par rapport au dioxyde de chrome ferromagnétique.

3. Dioxyde de chrome ferromagnétique selon la revendication 1 ou 2, caractérisé en ce que Me est Cu ou Co.

4. Procédé de préparation de dioxyde de chrome ferromagnétique stabilisé selon l'une quelconque des revendications 1 à 3, caractérisé en ce qu'il comporte les étapes suivantes:

1) on disperse du dioxyde de chrome ferromagnétique particulaire dans l'eau;
2) on coprécipite des quantités équivalentes de $Fe(OH)_3$ et d'hydroxyde d'un métal divalent tel que $Mn(OH)_2$ ou $Me(OH)_2$ sur le dioxyde de chrome dispersé;
3) on sépare l'eau du mélange de dioxyde de chrome, $Fe(OH)_3$ et d'hydroxyde de métal divalent;
4) on sèche le mélange de dioxyde de chrome, $Fe(OH)_3$ et hydroxyde de métal divalent à une température inférieure à 100°C; et
5) on calcine le mélange séché à une température de 250 à 350°C.

5. Procédé selon la revendication 4, caractérisé en ce que l'on précipite $Fe(OH)_3$ et l'hydroxyde de métal divalent sur le dioxyde de chrome par réaction d'un sel hydrosoluble de métal divalent et un sel hydrosoluble de fer ferreux ou ferrique, avec une solution d'un hydroxyde de métal alcalin ou d'ammonium et, si le sel de fer est un sel ferreux, on oxyde l'hydroxyde ferreux en hydroxyde ferrique par un agent oxydant.

6. Procédé selon la revendication 5, caractérisé en ce que l'on effectue l'oxydation de l'hydroxyde ferreux grâce à un barbotage d'air ou d'oxygéne dans le milieu reactionnel.

7. Procédé selon l'une quelconque des revendications 4 à 6, caractérisé en ce que l'on effectue la calcination à une température de 300 à 350°C.


## Patentansprüche

1. Stabilisiertes ferromagnetisches Chromdioxid, bestehend aus Teilchen eines mit einer stabilisierenden Substanz überzogenen, ferromagnetischen Chromdioxids, dadurch gekennzeichnet, daß die stabilisierende Substanz aus
(a) einer äquimolaren Mischung aus $Fe_2O_3$ und MnO oder
(b) einer Mischung eines Ferrits $MeFe_2O_3$ und den Oxiden $Fe_2O_3$ und MeO (wobei Me für Cu, Co, Zn oder Mg steht) besteht, wobei in der Mischung das molare Verhältnis $Fe_2O_3$:MeO eins ist und die Menge an Ferrit in der Mischung diejenige ist, die man durch Calcinieren einer äquimolaren Mischung aus $Fe_2O_3$ und MeO bei einer Temperatur von 250 bis 350°C erhält.

2. Stabilisiertes ferromagnetisches Chromdioxid gemäß Anspruch 1, dadurch gekennzeichnet, daß die stabilisierende Substanz in einer Menge von 2 bis 12 Gew.-%, bezogen auf das Gewicht des ferromagnetischen Chromdioxids, anwesend ist.

3. Stabilisiertes Chromdioxid nach Anspruch 1 oder 2, dadurch gekennzeichnet, daß Me Cu oder Co ist.

4. Verfahren zur Herstellung eines stabilisierten ferromagnetischen Chromdioxids nach einem der Ansprüche 1 bis 3, dadurch gekennzeichnet, daß man
(1) ein fein zerteiltes ferromagnetisches Chromdioxid in Wasser dispergiert;
(2) äquivalente Mengen von $Fe(OH)_3$ und eines zweiwertigen Metallhydroxids $Mn(OH)_2$ oder $Me(OH)_2$ $Me(OH)_2$ gleichzeitig auf dem dispergierten Chromdioxid ausfällt;
(3) aus der Mischung aus Chromdioxid, $Fe(OH)_3$ und zweiwertigem Metallhydroxid Wasser abtrennt;
(4) die Mischung aus Chromdioxid, $Fe(OH)_3$ und zweiwertigem Metallhydroxid bei einer Temperatur nicht über 100°C trocknet; und
(5) die getrocknete Mischung bei einer Temperatur von 250 bis 350°C calciniert.

9

5. Verfahren nach Anspruch 4, dadurch gekennzeichnet, daß $Fe(OH)_3$ und das zweiwertige Metalloxid auf dem Chromdioxid durch Umsetzung eines wasserlöslichen Salzes des zweiwertigen Metalls und eines wasserlöslichen Salzes des zwei- oder dreiwertigen Eisens mit einer wässrigen Lösung eines Alkalimetallhydroxids oder von Ammoniumhydroxid ausgefällt werden und, falls das Eisensalz ein Salz des zweiwertigen Eisen ist, das ausgefällte Eisen-(II)-hydroxid mittels eines Oxidationsmittels in Eisen-(III)-hydroxid oxidiert wird.

6. Verfahren nach Anspruch 5, dadurch gekennzeichnet, daß die Oxidation des Eisen-(II)-hydroxids durch Hindurchleiten von Luft oder Sauerstoff durch das Reaktionsmedium erfolgt.

7. Verfahren nach einem der Ansprüche 4 bis 6, dadurch gekennzeichnet, daß das Calcinieren bei einer Temperatur von 300 bis 350°C erfolgt.